# EUROPEAN PATENT APPLICATION

(11) **EP 3 541 124 A1**
(43) Date of publication of application: **18.09.2019**
(21) Application number: 18207181.1
(22) Date of filing: 30.10.2009
(51) Int. Cl.: H04W 56/00, H04W 72/08, H04W 84/04

(54) **HENB BLIND DETECTION FOR HIERARCHY CONFIGURATION**

(62) Divisional of application: 09850745.2
(71) Applicant: Nokia Solutions and Networks Oy, 02610 Espoo (FI)
(72) Inventor: LIN, Jie Zhen, Beijing, Hainan 100083 (CN); HE, Jing, Beijing, Beijing 100102 (CN); YAO, Chun Hai, Beijing, Beijing 100102 (CN); ZHAO, Dong, Beijing, Beijing 100011 (CN); WU, Chunli, Beijing, Beijing 102208 (CN); SKOV, Peter, 2500 Valby (DK)
(74) Representative: Nokia EPO representatives

(57) **Abstract**

It is provided an apparatus, comprising deciding means configured to decide whether or not a predefined condition is met; receiving means configured to receive a first signal at predefined places; inhibiting means configured to inhibit sending a second signal at a plurality of the predefined places, if the deciding means decides that the predefined condition is met; monitoring means configured to monitor, if the deciding means decides that the predefined condition is met, for at least two of the predefined places whether or not a first signal is received at the predefined places; defining means configured to define a first mute place based on the monitoring result of the monitoring means and a predefined rule, wherein the first mute place is one of the predefined places at which, according to the monitoring means, a first signal is received; wherein the inhibiting means is configured to inhibit sending the second signal at the first mute place.

## Description

### Field of the invention

The present invention relates to an apparatus, a method, a system, and a computer program product for blind detection for synchronization by a Home eNodeB.

### Background of the invention

The present application relates to the long term evolution (LTE) or long term evolution advanced (LTE-A) system of the 3^{rd} generation partnership project (3GPP). In 3GPP radio access network working group (RAN4), over-the-air synchronization for LTE time division duplex (TDD) Home eNodeBs is in discussion. For Home eNodeBs (HeNB) not comprising a global positioning system (GPS) receiver, over-the-air synchronization using network listening scheme is an essential synchronization technique. To keep its timing or frequency stable, a Home eNB need to monitor the downlink (DL) waveform of another eNB or HeNB periodically, and adjusts its own transmit time and/or frequency reference according to that received waveform, where the common reference signal (CRS) is widely considered to be used for tracing.

Based on network listening, the HeNB needs to find a suitable slot to trace the DL waveform, e.g. CRS of another eNB/HeNB. To avoid interference from neighbour HeNB, the HeNBs which need to synchronize should mute and trace in same slot. HeNBs synchronizing to one source are also called HeNB of same stratum.

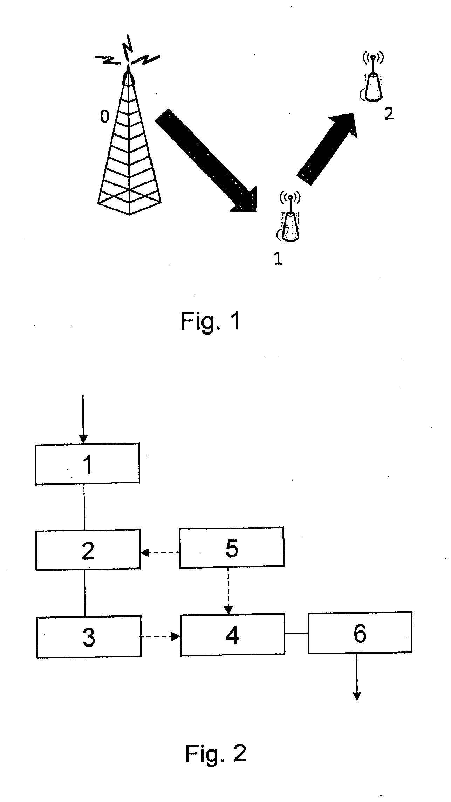

Additionally, some operators may need to support a multi-hop or multi-stratum synchronization solution. This is illustrated in Fig. 1. Fig. 1 shows an eNodeB (eNB) 1, and two HeNB 2, 3.

According to this example, HeNB 2 may derive its time/frequency synchronization from HeNB 1, which in turn derives its time from eNB 0, which may derive its time from an external reference such as a global navigation satellite system (GNSS), e.g. GPS. In this example, eNB 0 has stratum 0, HeNB 1 has stratum 1 and HeNB 2 has stratum 2. More generally, if a HeNB tracks another (H)eNB of stratum n, the stratum of the former HeNB is n+1.

To support synchronization by network listening over-the-air, HeNB firstly need to select a synchronization source. For a given synchronization source, it needs to be aware of its synchronization stratum and synchronization status. The synchronization status may be either synchronized with GNSS or spontaneous synchronized within an isolated network where no GNSS is received.

From this information, the HeNB should be able to decide on its own synchronization activities such as being mute on which slots.

At least three problems arise for such synchronization:
The first one is how a HeNB can know its surrounding (H)eNB's stratum of synchronization, in order to decide its own stratum level by listening lower level synchronization eNodeB and keep synchronization with the synchronization source. The second one is how to inform the stratum level and synchronization status to others. Furthermore, a solution shall be backward compatibility with Macro cells.

It is proposed in liaison R4-093465 of the 3GPP technical specification group (TSG) RAN working group 4, meeting #52b (Aug24-28, 2009) a solution using multimedia broadcast single frequency network (MBSFN) subframe to do network listening. This solution needs to have the stratum information and synchronization status broadcasted in subframes, then the HeNB can determine its own stratum.

To implement the MBSFN subframe assignment solution, a signaling that indicates the stratum level and synchronization status of an eNodeB has to be specified.

According to the proposed solution two new indicators need to be added in signalling, e.g. System Information Broadcasting (SIB) of Macro eNodeB and Home eNodeB:
- 1 bit indicates the synchronization status (The eNB is synchronized by a GNSS or not);
- 2 bits indicate the stratum level (0, 1, 2, 3): the proposal assumes that the number of stratums should be limited to 4: the Macro eNodeB is level 0; the Home eNodeB can be 1, 2, or 3.

The period parameter for muting was fixed in the proposal to 32 radio frames (RF), corresponding to 320 ms.

Any new SIB information creation is critical especially for Macro eNodeB. In current specifications, all SIB information is used for user equipment (UE) reading, instead of being designed for the eNodeBs/Home eNodeBs. The proposed solution would break this rule of SIB information usage. Therefore, it is better to avoid such new SIB information elements adding in the SIB specification (3GPP TS 36.331). In particular, if such information elements become a mandatory requirement for equipments,it will impact Macro eNodeBs as well as Home eNodeBs. If there is another solution that can let all Home eNodeBs indicate their synchronization status and stratum level to others implicitly that does not need any signalling broadcasting, then there is no need for extra signalling and signalling specification effort.

Furthermore, it is quite possible that scenario of higher stratum be exist, which should be more flexibly supported.

### Summary of the invention

It is an object of the present invention to improve the prior art.

According to a first aspect of the invention, there is provided an apparatus comprising deciding means configured to decide whether or not a predefined condition is met; receiving means configured to receive a first signal at predefined places; inhibiting means configured to inhibit sending a second signal at a plurality of the predefined places, if the deciding means decides that the predefined condition is met; monitoring means configured to monitor, if the deciding means decides that the predefined condition is met, for at least two of the predefined places whether or not a first signal is received at the predefined places; defining means configured to define a first mute place based on the monitoring result of the monitoring means and a predefined rule, wherein the first mute place is one of the predefined places at which, according to the monitoring means, a first signal is received; wherein the inhibiting means is configured to inhibit sending the second signal at the first mute place.

Modifications of the apparatus of the first aspect are as follows:
The apparatus may comprise controlling means configured to control a timing based on the first signal comprising a first synchronization signal.

The second signal may comprise a second synchronization signal corresponding to the first synchronization signal.

The defining means may be further configured to define a second mute place depending on the first mute place and the predefined rule, wherein the second mute place is one of the predefined places different from the first mute place, and the inhibiting means may be further configured to inhibit sending the second signal at the second mute place.

The apparatus may further comprise power detecting means configured to detect a received power of the first signal, and the defining means may be further configured to define the first mute place based on the received power.

The apparatus may further comprise interference detecting means configured to detect an interference level of the first signal, and the deciding means may be configured to decide that the predefined condition is met, if the interference level is larger than a predefined threshold.

The predefined condition may comprise at least one of a booting of the apparatus, a receipt of a predefined command by the apparatus, a deterioration of the first signal at the first mute place more than a predefined level, and lapse of a predefined time after the condition has been met before.

The apparatus may further comprise sending means configured to send the second signal at a sending place out of the predefined places, wherein the sending place depends on the first mute place and is different from the first mute place.

According to the predefined rule a first hierarchical level corresponding to the place of the received first signal may be determined, a second hierarchical level may be defined as the next level below the first hierarchical level and associated to the apparatus, and the first mute place may be determined from the second hierarchical level.

The hierarchical level may correspond to a stratum of synchronization.

The predefined places may comprise predefined times.

A base station means or a base station may comprise an apparatus according to the first aspect.

According to a second aspect of the invention there is provided a method comprising deciding whether or not a predefined condition is met; receiving a first signal at at least one of predefined places; inhibiting sending a second signal at a plurality of the predefined places if the predefined condition is met; monitoring, if the predefined condition is met, for at least two of the predefined places whether or not the first signal is received at the predefined place; defining a first mute place based on the monitoring result and a predefined rule, wherein the first mute place is one of the predefined places at which a first signal is received; and inhibiting sending the second signal at the first mute place.

Modifications of the method according to the second aspect are as follows:
The method may further comprise controlling a timing based on the first signal comprising a first synchronization signal.

The second signal may comprise a second synchronization signal corresponding to the first synchronization signal.

The method may further comprise defining a second mute place depending on the first mute place and the predefined rule, wherein the second mute place is one of the predefined places different from the first mute place, and inhibiting sending the second signal at the second mute place.

The method may further comprise detecting a received power of the first signal, and defining the first mute place based on the received power.

The method may further comprise detecting an interference level of the first signal, and deciding that the predefined condition is met, if the interference level is larger than a predefined threshold.

The predefined condition may comprise at least one of a booting of the apparatus, a receipt of a predefined command by the apparatus, a deterioration of the first signal at the first mute place more than a predefined level, and lapse of a predefined place after the condition has been met before.

The method may further comprise sending the second signal at a sending place out of the predefined places, wherein the sending place depends on the first mute place and is different from the first mute place.

According to the predefined rule a first hierarchical level corresponding to the place of the received first signal may be determined, a second hierarchical level may be defined as the next level below the first hierarchical level and associated to the apparatus, and the first mute place may be determined from the second hierarchical level.

The hierarchical level may correspond to a stratum of synchronization.

The predefined places may comprise predefined times.

The method may be a method of blind detection for hierarchy configuration.

According to a third aspect of the invention, there is provided an apparatus comprising decider configured to decide whether or not a predefined condition is met; receiver configured to receive a first signal at predefined places; inhibitor configured to inhibit sending a second signal at a plurality of the predefined places, if the decider decides that the predefined condition is met; monitor processor configured to monitor, if the decider decides that the predefined condition is met, for at least two of the predefined places whether or not a first signal is received at the predefined places; definer configured to define a first mute place based on the monitoring result of the monitor processor and a predefined rule, wherein the first mute place is one of the predefined places at which, according to the monitor processor, a first signal is received; wherein the inhibitor is configured to inhibit sending the second signal at the first mute place.

Modifications of the apparatus of the third aspect are as follows:
The apparatus may comprise controller configured to control a timing based on the first signal comprising a first synchronization signal.

The second signal may comprise a second synchronization signal corresponding to the first synchronization signal.

The definer may be further configured to define a second mute place depending on the first mute place and the predefined rule, wherein the second mute place is one of the predefined places different from the first mute place, and the inhibitor may be further configured to inhibit sending the second signal at the second mute place.

The apparatus may further comprise power detector configured to detect a received power of the first signal, and the definer may be further configured to define the first mute place based on the received power.

The apparatus may further comprise interference detector configured to detect an interference level of the first signal, and the decider may be configured to decide that the predefined condition is met, if the interference level is larger than a predefined threshold.

The predefined condition may comprise at least one of a booting of the apparatus, a receipt of a predefined command by the apparatus, a deterioration of the first signal at the first mute place more than a predefined level, and lapse of a predefined time after the condition has been met before.

The apparatus may further comprise sender configured to send the second signal at a sending place out of the predefined places, wherein the sending place depends on the first mute place and is different from the first mute place.

According to the predefined rule a first hierarchical level corresponding to the place of the received first signal may be determined, a second hierarchical level may be defined as the next level below the first hierarchical level and associated to the apparatus, and the first mute place may be determined from the second hierarchical level.

The hierarchical level may correspond to a stratum of synchronization.

The predefined places may comprise predefined times.

A base station or a base station controller may comprise an apparatus according to the third aspect.

According to a fourth aspect of the invention, there is provided a computer program product embodied on a computer-readable medium, comprising program instructions which perform, when run on a computer, the execution of which result in operations of the method according to the second aspect of the invention.

According to a fifth aspect of the invention, there is provided a system, comprising a first apparatus configured to send a signal; and a second apparatus according to the first aspect of the invention, wherein the receiving means is configured to receive the first signal sent by the first apparatus as the first signal.

In the system of the fifth aspect, the first apparatus may be synchronized by a global navigation satellite system, or the first apparatus may be an apparatus according to the first aspect comprising a sending means configured to send the second signal at a sending place out of the predefined places, wherein the sending place depends on the first mute place and is different from the first mute place, wherein the signal comprises the second synchronization signal.

According to a sixth aspect of the invention, there is provided a system, comprising a first apparatus configured to send a signal; and a second apparatus according to the third aspect of the invention, wherein the receiver is configured to receive the first signal sent by the first apparatus as the first signal.

In the system of the sixth aspect, the first apparatus may be synchronized by a global navigation satellite system, or the first apparatus may be an apparatus according to the third aspect comprising a sender configured to send the second signal at a sending place out of the predefined places, wherein the sending place depends on the first mute place and is different from the first mute place, wherein the signal comprises the second synchronization signal.

It is to be understood that any of the above modifications can be applied individually or in combination to the respective aspects to which they refer, unless they are explicitly stated as excluding alternatives.

Further details, features, objects, and advantages are apparent from the following detailed description of the preferred embodiments of the present invention which is to be taken in conjunction with the appended drawings, wherein
Fig. 1 shows a network according to an embodiment of the invention;
Fig. 2 shows an apparatus according to an embodiment of the invention.
Fig. 3 shows a timing diagram of radio frames and subframes of an eNB and several HeNBs with different strata according to an embodiment of the invention;
Fig. 4 shows another timing diagram of radio frames and subframes of an eNB and several HeNBs with different strata according to an embodiment of the invention; and
Fig. 5 shows a method according to an embodiment of the invention.

### Detailed description of certain embodiments

Herein below, certain embodiments of the present invention are described in detail with reference to the accompanying drawings, wherein the features of the embodiments can be freely combined with each other unless otherwise described. However, it is to be expressly understood that the description of certain embodiments is given for by way of example only, and that it is by no way intended to be understood as limiting the invention to the disclosed details.

Moreover, it is to be understood that the apparatus is configured to perform the corresponding method, although in some cases only the apparatus or only the method are described.

In the embodiments presented below, a solution with at least the following advantages over the prior art is described:
- The Home eNodeBs indicate their synchronization status and stratum level to others implicitly and do not need any extra signalling broadcasting. Thus, there is no requirement for signalling. Furthermore, backward compatibility for Macro eNB is ensured.
- Higher stratum levels than 3 are supported. The period parameter for muting, which was fixed in Qualcomm's and CMCC's proposal to 32 RF (320ms), is flexible. Thus, embodiments of the present invention are more flexible and may fit to more network scenarios than the conventional solution.

Thus, the invention aims at a solution mainly to solve the following two questions:
1. How to decide a HeNB's own stratum level by blind detecting a lowest synchronization stratum neighbour eNodeB? and
2. How to implicitly inform the stratum level and synchronization status?

Main features of certain embodiments of the invention are as follows:
1. For each stratum there is a mapping to a radio frame (RF) / subframe (SF), which is its muting place (also named muting time or muting slot). I.e., for each stratum, a HeNB will mute in its muting slot.
   In preferable embodiments, the muting slot of each stratum should be designed for easy blind detection: the design may smooth the blind detection, such as by orderly arranging muting places for stratum one by one, certain seperate place for GNSS-synchronization type or isolated synchronization type.
2. All HeNB of embodiments of the invention know the mapping of each stratum and its muting place.
   a. The mapping (e.g. a mapping table) may be provided by an operation and maintenance (O&M) command informing the HeNB about the mapping table.
   b. The mapping table may also be pre-configured on HeNBs, and be loaded upon booting of the HeNB.
3. The system frame number should be aligned between the HeNB, so that the muting slot in the mapping rule understood by all HeNBs is the same.
4. The HeNB will do blind detection of its stratum. For this, it will recognize the strata of its surrounding base stations based on the mapping table, decide, based on some strategy, its synchronization source and, thus, decide its own stratum and muting place.

In the following, some details of certain embodiments which explain the upper principles are given.

### 1) Mapping table of strata and muting place

First of all, an example of a design of a mapping table of stratum and its muting places according to some embodiments may be as follows (while not precluding other possibilities):
The mapping may be a list of pairs as follows which needs to be known by all HeNBs:
(Stratum N, RF# A, SF# B [, Muting Repeating Period M, Synchronization type K, Continuous Muting RF Number of X in same period, Continuous Muting SF Number of Y in same RF])

Where:
N refers to the defined stratum of HeNBs.
A refers to Radio frames which number mod n (the value of repeating period of muting) equal to A.
B refers to subframe#B of the previously defined Radio frame.
M refers to the repeating period of muting, with the unit of Radio Frames. A default value may be 32 RFs.
K refers to the synchronization type, either synchronized with GNSS or synchronized in an isolated network. A default may be GNSS synchronized. Different synchronization types may have different rules on arranging the muting places. And for all the strata (including all the synchronization types), a muting place of each stratum is unique. For different synchronization types, the stratum number N could be the same, while the muting place should be different.
X refers to the continuous muting RF number in same period following RF# A, default may be zero.
Y refers to the continuous Muting SF Number in the same RF #A lasting following B, default may be zero.
   - The parameters in [] may be optional.
   - In some embodiments, the parameters may be configured by operators or with operator participation, in others, they may be predefined, e.g. by a standard.
   - It is preferable if the isolated synchronization case (i.e. no synchronisation by GNSS) is separated from the GNSS synchronized case by a different stratum. E.g., the isolated synchronization may start from stratum 11 and corresponding muting place. Thus, the merging of isolated synchronization network with GNSS synchronized network is facilitated if a bridge node is inserted between them.
   - The muting place should refer not only to the RF and SF defined here, but also specifically define the adopted network listening solution:
      ∘ Either adopt MBSFN for muting, then the muting place should specifically refer to the latter part without the first two symbols control channel.
      ∘ Or adopt special subframe of longer guard period (GP) for mute, then the muting place should specifically refer to the GP where no transmission (Tx) and reception (Rx) is foreseen for the HeNB.

As an example, the mapping may be a table as follows:

| Radio frame number | Subframe number | Stratum level |
|---|---|---|
| 1 | 2 | 1 |
| 2 | 2 | 2 |
| 3 | 2 | 3 |
| 4 | 2 | 4 |

In the table, Radio frame number and Subframe number indicate a muting place of the stratum level of the same line. Different designs of the mapping table may be suitable for different scenarios.

The mapping table may be conveyed by an O&M command. E.g., an O&M center may send the corresponding command to all Home eNodeBs, but need not to send it to a Macro eNodeB.

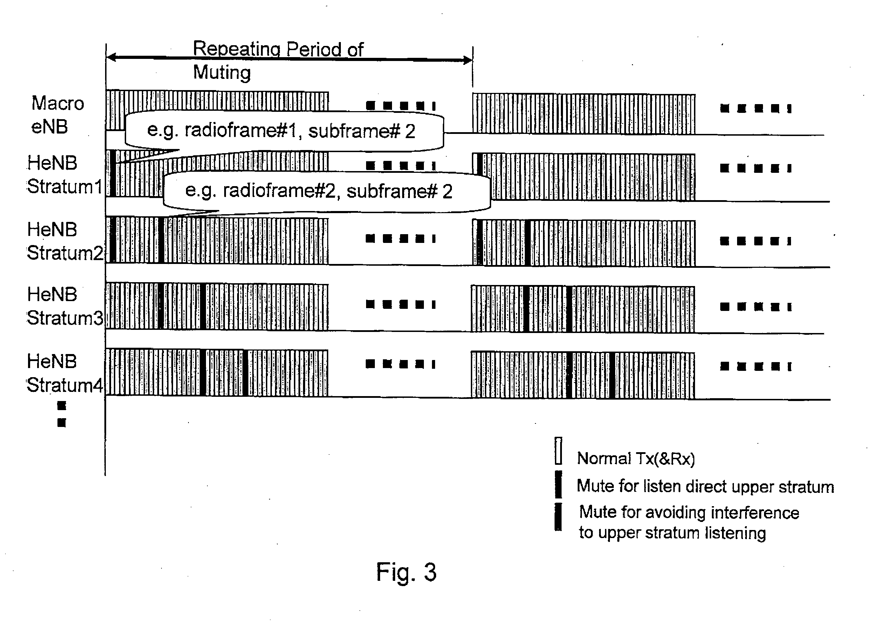

Fig. 3 shows a timing diagram of radio frames and subframes of an eNB and several HeNBs with different stratum according to an embodiment of the invention, where the mapping table defined above is implemented.

Normal subframes (i.e. with normal transmission and reception which are not affected by the blind detection) are shown in light grey, and subframes, where the corresponding network element is mute to listen to the direct upper stratum, are shown in black.

In addition, subframes are shown in dark grey, where the corresponding network element is mute to avoid interference to upper stratum listening of an upper HeNB. This second muting is preferable but not mandatory for embodiments of the invention.

Since the mapping table is conveyed to all HeNBs, they will understand strata and muting places as shown on Figure 3 from the mapping table:
- the HeNB of stratum 1 will mute [1, 2] (Radio frame number mod value is 1 and Subframe number is 2) to monitor the adjacent macro eNodeB's downlink waveform to keep synchronization;
- the HeNBs of stratum 2 will mute [2, 2] to monitor the adjacent stratum1 HeNBs, while [1, 2] will also be mute to avoid interference to neighbour stratum 1 HeNB since stratum 1 HeNB will listen to macro level at that time;
- the HeNBs of stratum 3 will mute [3, 2] to monitor the adjacent level 2 HeNBs, while [2,2] should be also mute to avoid interference to upper stratum;
- and the HeNBs of level 4 will mute [4, 2] to monitor the adjacent level 3 HeNBs, , while [3,2] should be also mute to avoid interference to upper stratum
- If more strata are present, by the same token, the muting place could be known.

As previously mentioned, the mapping can be pre-configured on HeNB at implementation or can be conveyed by O&M message.

If conveyed by O&M message, it should be provided before the blind detection and synchronization work. When a HeNB is booting up, the HeNB will setup a connection with the network via the S1 interface, and thus O&M information could be fetched. Conveying by O&M also provides flexibility to make update for these mapping, while this update should occur in very low frequency (months or years) to limit network impact.

### 2) Blind Detection

In some embodiments, the HeNB will execute a special process of blind detection and consult the mapping table to recognize the strata of its surrounding base stations, and basing some strategy to decide its synchronization source. Thus, it also decides its own stratum and muting place.

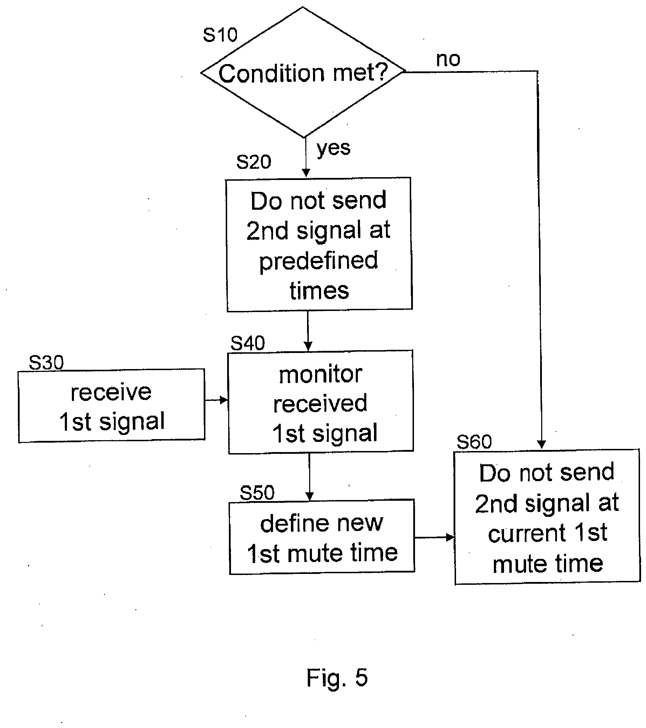

The method is shown in Fig. 5. It may be repeated for each synchronization cycle.

In step S10, it is considered whether a condition is met that triggers the blind detection process. Such a condition could be e.g. booting of HeNB, or receipt of a predefined O&M command, or elapse of a certain time after the last blind detection process.

In some embodiments, the HeNB should do the blind detection on booting stage, when operation has not begun and user equipments (UE) are not attached.

During network operation, it may happen that a neighbour node is added or removed, which may impact the synchronization chain and may lead to a new synchronization source selection.

By removing a neighbour node or by a failure of this neighbour node, a HeNB may loose its synchronization source. This is detected if no synchronization signal is received at the muting place for a certain time, which may be another condition to start a blind detection process.

If another node is added or the failing neighbour node is recovered, it may cause more interference in the receipt of the synchronization signal of the synchronization source, if the new node could happen to shorten the synchronization chain of the existent HeNB. Also in this case, if an interference level exceeding a certain threshold is detected, the HeNB on operation may initialize the process of blind detection to re-decide its synchronization source and its own stratum and then re-synchronize.

If no such trigger condition is fulfilled (condition met = no in step S10), normal operation is performed, wherein no synchronization signal is sent at the mute time of the HeNB (step S60).

If the condition is fulfilled (condition met = yes in step S10), in the following blind detection process, the HeNB according to an embodiment of the invention may perform the following steps:
1. Do cell search for all surrounded BSs. The HeNB may select to monitor only several BSs based e.g. on the received power being larger than a certain threshold. Then HeNB will monitor all selected BSs signals in all muting places of all strata listed on the mapping table. For this, referring to Fig. 5, the HeNB will mute at all muting places of the mapping table (S20), receive a signal at the muting places (S30), and monitor whether or not the received signal is a synchronization signal of a monitored BS (S40).
2. Based on the monitoring results of the last step, HeNB will analyze the stratum information of the surrounding base stations (BS) and select its synchronization source, and define its own stratum and corresponding muting place (step S50).
   2.1 HeNB may compare the monitoring results and the mapping table to identify the stratum of a neighbouring base station. In some embodiments, the HeNB may also identify the synchronization type of the monitored BSs, if different muting place are defined to distinguish GNSS synchronized or isolated synchronized NodeBs. The following example refers to the exemplary mapping table defined above. For one certain BS, the following analysis may be performed:
      a) If HeNB can read all the downlink subframe CRS of this BS in all muting place of all strata, after several muting repeating periods' double check (e.g. a 320ms's multiple), that means monitored base station is eNB (or has stratum 0);
      b) if the HeNB can not read the CRS of this BS only in the muting place of stratum 1, e.g. no CRS of this BS found in [1, 2], while CRS found in [2,2], and with several round double check, it can be concluded that the monitored BS is of stratum 1;
      c) If the HeNBs can not listen the CRS only in [1, 2] and [2,2], after several periods' double check, the HeNB can confirm that the monitored BS is of stratum 2;
      d) by the same token, if the HeNBs can not listen the CRS only in [2, 2] and [3,2], after several periods' double check, the HeNB can confirm that the monitored BS is of stratum 3;
      e) by the same token, other strata could be identified.
   2.2. Basing the results of step 2, HeNB will know all the selected BSs' strata. Hence, HeNB may select its synchronization source, and thus decide its own stratum as the stratum of the selected monitored BS plus 1. Then based on the mapping table, HeNB will know its muting place (step S50).
      a) If the synchronization source is eNB (or has stratum 0), the HeNB can define its own synchronization stratum as level 1. Then the HeNB will configure, according to the exemplary mapping table, the [Radio frame, subframe]=[1,2] for mute. All other [Radio frame, Subframe] combinations will be treated as normal subframe for normal work, i.e. not affected by the blind detection method.
      b) If the synchronization source is of stratum 1, the HeNB decides its own stratum should be level 2. Thus this HeNB will mute on [1,2] and [2,2] based on the mapping table.
      c) If the synchronization source is of stratum 2, the HeNB will configure its own stratum as level 3. Thus, the HeNB will configure [2, 2] and [3, 2] for muting.
      d) If the synchronization source is of stratum 3, the HeNB will configure its own stratum as level 4. Thus, the HeNB will configure [3, 2] and [4, 2] for muting based on the mapping.
      e) By the same token, based on the synchronization source stratum, for higher strata, HeNB could decide its own stratum as the synchronization source stratum plus 1, and its corresponding muting places.
   If several potential synchronization sources with the same stratum provide similar receiving signal power, HeNB may randomly select one of them, or may take other aspects into account for a decision.
3. After defining its own muting place, the HeNB will return to normal operation and will not transmit on its muting place (S60).
4. On condition of booting, receipt of a predefined command (e.g. an O&M command), current synchronization source severely degrading etc., the HeNB may re-evaluate and decide to determine a new synchronization source ("yes" in step S10). Otherwise, the HeNB will keep tracing its synchronization source on its current muting place.

Embodiments of the present invention may also ensure synchronization in an isolated network. "Isolated network" is called a scenario, where no GNSS source/ macro eNB signals could be received. If there are several free running HeNBs located in this scenario that can hear each other, then synchronization is also needed to ensure that the network works normally. By some scheme or randomly, one HeNB will be selected as synchronization source in this kind of network and others will follow it level by level.

Under this condition, it is assumed that not all the HeNBs in this isolated network will be booted at the same time. If one HeNB boots up and cannot find any CRS in all RF/SF, then it may confidently decide that it is the first - free-running - HeNB of this area. Based on the mapping table, it may determine that its own stratum is the first stratum of isolated synchronization type and begin operation. Then, another HeNB following the first one may be synchronized to the first HeNB based on the blind detection mechanism.

In case that at some time a new HeNB goes into operation which is located at the edge of the isolated network and reaches the Macro eNB's coverage or a GNSS synchronized network, then all HeNBs in this isolated network are better to follow the GNSS synchronization. Then the "isolate" network may discard its previous isolated synchronization type stratum mapping, and do blind detection to decide its stratum in a GNSS synchronized network.

As discussed above, the HeNB (victim) of the isolated network may detect that a new HeNB was booted by severe interference for a period of time. Since there should be no severe interference for its muting place in a synchronized network, occurrence of new interference in its muting place means that a new HeNB was booted which may have a stratum configuration being in conflict with the present stratum configuration.

There is some likelihood that the new HeNB is of the GNSS synchronized type. If this interference lasts for a minimum period, and the victim HeNB is in isolated synchronization type, then it may not keep its stratum and may assume a GNSS synchronized HeNB booted nearby. Additionally, the victim HeNB may use UE measurement report to check whether a new cell is established to avoid false alarm of a Macro UE interference. If the victim HeNB assumes that there is a new NB, the victim HeNB may re-do the blind detection to synchronize with the GNSS synchronized HeNB. Depending on the implementation, a reboot may be performed prior to the blind detection.

In the following, the case when a new node that may shorten the synchronization chain is added to the network is outlined in greater detail. The consideration may apply for both the GNSS synchronized and the isolated network.

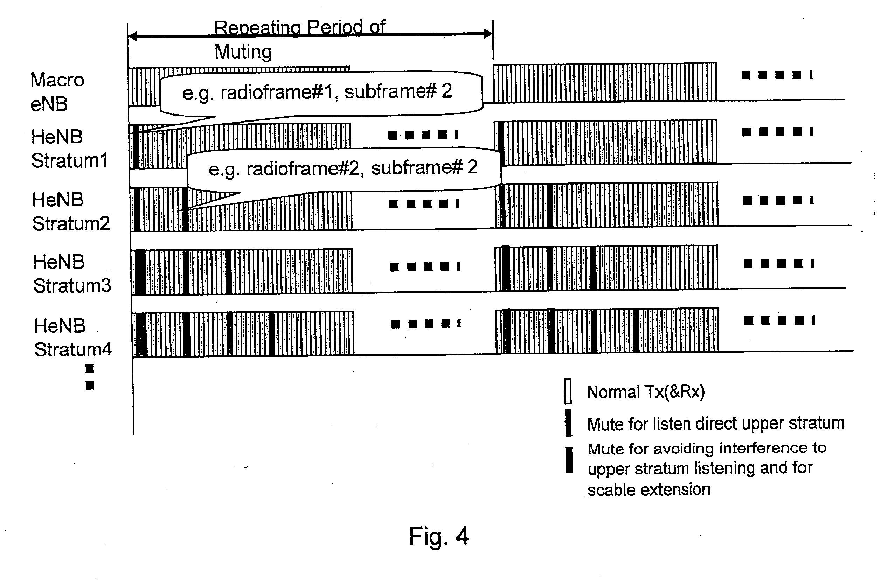

Depending on the design of the mapping of stratum and muting place, the node adding and also removal could be very smoothly with the tradeoff of high overhead of reserved muting place, as shown in Fig. 4. I.e., the HeNB may transfer from a larger stratum (or an isolated network) to a smaller stratum.

Fig. 4 corresponds to Fig. 3, except that the RF/SF marked in dark gray are not only those RF/SF that are mute for avoiding interference to upper stratum listing, but also RF/SF that are mute for scalable extension.

The reservation of a muting place as discussed above due to a blind detection process may be effective until severe interference occurs in the own muting place of a HeNB. Receiving interference in its own muting place, the HeNB may reserve all the muting places of lower stratums, i.e. mute at these muting places. Then, it may monitor those muting places, and do blind detection on these muting places only to identify whether there is a new cell with a lower stratum than that of its current synchronization source.

If the HeNB has the lowest stratum of an isolated network, it may detect whether the new synchronization source is of the GNSS synchronized type. In this case, the HeNB may use the new cell as synchronization source. Thus, the synchronization chain is shortened. Then, the HeNB may release unnecessary muting places.

Embodiments of this invention may be used for synchronization of HeNB in time division duplex (TDD) systems, but also in frequency division duplex (FDD) systems and other systems under the following condition.

If radio frames / subframes or other time slots are used for the transmission of the synchronization signal, the system frame number (SFN) should be aligned between each HeNB, so that the muting slot in the mapping rule as understood by all HeNBs is the same. A TDD system of the global system for mobile communication (GSM), universal mobile telecommunication system (UMTS), LTE, and LTE-A is SFN aligned by deployment. If the system is not SFN aligned by deployment, e.g. an FDD system, a backbone NTP (accuracy on 1 ms) may align the System Frame Number with sufficient accuracy (1 RF lasts for 10ms).

Fig. 2 shows an apparatus according to an embodiment of the invention. A receiver is denoted by 1, a monitor by 2, a definer by 3, an inhibitor by 4, a decider by 5, and a sender by 6.

The receiver 1 is configured to receive a synchronization signal at predefined RF/SFs.

The decider 5 decides whether one of the predefined conditions is fulfilled that trigger performing the blind detection. Such conditions could be e.g. booting, a special O&M command, strong interference on the synchronisation signal, no synchronization signal at the muting time, and lapse of a certain time after a previous blind detection.

If the condition is fulfilled, the monitor 2 monitors for each of the predefined RF/SF, whether a synchronization signal is received. The RF/SF may only be a subset of all RF/SF defined in the mapping table of stratum and muting place, e.g. as discussed with reference to adding a new BS. From the result of the monitoring by the monitor 2, the definer 3 defines a new stratum of the HeNB and from that, based on the mapping table, a new muting time.

During the performance of the blind detection, i.e., when the predefined condition is fulfilled, the inhibitor 4 inhibits the sender 6 to send a signal on the RF/SF under monitoring. If a new muting time is defined, the sender 6 may send signals on all RF/SF but the muting place of the apparatus, which sending is inhibited by the inhibitor 4.

The sender 6 may send a signal, e.g. a synchronization signal, which is identical to the signal received by the receiver 1 except for the place (in the embodiment: radio frame and subframe) where it is sent.

Above, embodiments of the invention related to blind detection for synchronization are described. However, according to other embodiments, any information may be transmitted in place of a synchronization signal.

In further embodiments, other nodes than HeNBs may be implemented. These nodes should be ordered in a hierarchical way, where the information to be transmitted is sent from the top of the hierarchy to the bottom. In the embodiments above, the stratum (i.e. the pair of stratum type and stratum level) or the stratum level only (if isolated networks are marked by corresponding stratum levels) correspond to a hierarchy level.

In still further embodiments, instead of a downlink in LTE networks, other links between the nodes may be used. However, it is important that a certain level of synchronization is ensured in order to unambiguously to identify the mute times.

In the embodiments described above, the muting places correspond to muting times. I.e., an information such as a synchronization signal is transmitted in a predefined time period (time slot).

In still further embodiments, an information may be transmitted in other dimensions, e.g. frequency slots or "code slots". In these cases, the muting places correspond to muting frequencies or muting codes.

E.g., an embodiment may be based on an FDD system. A signal, e.g. a synchronization signal, may be transmitted on a predefined frequency depending on the hierarchical level of the sender. The corresponding receiving side mutes at this frequency.

During blind detection, the receiving side mutes on several of the predefined frequencies and detects where to receive or not the synchronization signal. From that, it determines the hierarchical level of the sending side, defines its own hierarchical level as the next level below, and from this its muting frequency.

Some advantages of embodiments of this invention are:
1. This implicit method of blind detection does not need extra signalling to indicate stratum and synchronization status, thus avoiding any impact to macro eNB.
2. The method also can be used in FDD HeNB synchronization.
3. The method does not limit the level to 3 in HeNBs. It can adjust the level number according to deployment in practice. The values of the repeating period and some more parameters optionally provided in the mapping table may be freely designed.
4. With an appropriate design of the mapping of stratum and muting place, embodiments of this invention may also support isolated synchronization scenario, and can provide smooth transfer to smaller stratum.

According to the above description, it should thus be apparent that exemplary embodiments of the present invention provide, for example an evolved Node B, or a component thereof, an apparatus embodying the same, a method for controlling and/or operating the same, and computer program(s) controlling and/or operating the same as well as mediums carrying such computer program(s) and forming computer program product(s).

For example, described above are apparatuses, methods, system and computer program products capable of blind detection for synchronization by a Home eNodeB.

In particular, it is provided an apparatus, comprising deciding means configured to decide whether or not a predefined condition is met; receiving means configured to receive a first signal at predefined places; inhibiting means configured to inhibit sending a second signal at a plurality of the predefined places, if the deciding means decides that the predefined condition is met; monitoring means configured to monitor, if the deciding means decides that the predefined condition is met, for at least two of the predefined places whether or not a first signal is received at the predefined places; defining means configured to define a first mute place based on the monitoring result of the monitoring means and a predefined rule, wherein the first mute place is one of the predefined places at which, according to the monitoring means, a first signal is received; wherein the inhibiting means is configured to inhibit sending the second signal at the first mute place.

Implementations of any of the above described blocks, apparatuses, systems, techniques or methods include, as non limiting examples, implementations as hardware, software, firmware, special purpose circuits or logic, general purpose hardware or controller or other computing devices, or some combination thereof.

It is to be understood that what is described above is what is presently considered the preferred embodiments of the present invention. However, it should be noted that the description of the preferred embodiments is given by way of example only and that various modifications may be made without departing from the scope of the invention as defined by the appended claims.

## Claims

1. Apparatus (0, 1, 2) for cell synchronization, comprising means for performing:
monitoring reference signals on muting places for stratum listed in a mapping table defining a mapping relationship between each stratum and its muting place; and
deciding stratum and corresponding muting place for the apparatus (0, 1, 2) based on the monitoring.

2. The apparatus (0, 1, 2) of claim 1, wherein the means are further configured to perform the monitoring by blind detection.

3. The apparatus (0, 1, 2) of any preceding claim wherein the means are further configured to perform:
comparing results of the monitoring and the mapping table; and
recognizing strata of surrounding cells (0, 1, 2) based on the comparison.

4. The apparatus (0, 1, 2) of any preceding claim wherein the means are further configured to perform inhibiting transmitting on the corresponding muting place of the stratum for the apparatus (0, 1, 2).

5. The apparatus (0, 1, 2) of any preceding claim wherein the means are further configured to perform determining a synchronization source based on the monitoring.

6. The apparatus (0, 1, 2) of claim 5 wherein the means are further configured to perform synchronizing to the synchronization source.

7. The apparatus (0, 1, 2) of claim 6 wherein the means are further configured to perform network listening, for the synchronization, on the corresponding muting place of the stratum for the apparatus (0, 1, 2).

8. The apparatus (0, 1, 2) of any one of claims 5 to 7 wherein the means are further configured to perform deciding the stratum and the corresponding muting place for the apparatus (0, 1, 2) based on the synchronization source.

9. The apparatus (0, 1, 2) of any preceding claim wherein a muting place corresponds to one of radio frames, radio subframes, frequencies and codes.

10. The apparatus (0, 1, 2) of any preceding claim wherein the means comprises
at least one processor; and
at least one memory including computer program code, the at least one memory and computer program code configured to, with the at least one processor, cause the performance of the apparatus (0, 1, 2).

11. A method for cell synchronization, the method comprising:
in a network element (0, 1, 2),
monitoring reference signals on muting places for stratum listed in a mapping table defining a mapping relationship between each stratum and its muting place; and
deciding stratum and corresponding muting place for the apparatus (0, 1, 2) based on the monitoring.

12. The method of claim 11, comprising performing the monitoring by blind detection.

13. The method of any one of claims 11 to 12, comprising:
comparing results of the monitoring and the mapping table; and
recognizing strata of surrounding cells (0, 1, 2) based on the comparison.

14. The method of any one of claims 11 to 13, comprising inhibiting transmitting on the corresponding muting place of the stratum for the apparatus (0, 1, 2).

15. The method of any one of claims 11 to 14, comprising determining a synchronization source based on the monitoring.

16. A computer program product comprising instructions which, when the program is executed by a computer, cause the computer to carry out the method of any one of claims 11 to 15.
